# EUROPEAN PATENT APPLICATION

(11) **EP 4 794 067 A1**
(43) Date of publication of application: **19.08.2026**
(21) Application number: 26155406.7
(22) Date of filing: 30.01.2026
(51) Int. Cl.: H01M 50/103, B23K 1/00, H01M 50/169

(54) **RECHARGEABLE BATTERY AND METHOD OF MANUFACTURING THE SAME**

(30) Priority: 13.02.2025 KR 20250018963
(71) Applicant: SAMSUNG SDI CO., LTD., Yongin-si, Gyeonggi-do 17084 (KR)
(72) Inventor: Lee, Hyunsoo, 17084 Yongin-si, Gyeonggi-do (KR)
(74) Representative: Meissner Bolte Partnerschaft mbB

(57) **Abstract**

A rechargeable battery includes an electrode assembly including a positive electrode, a negative electrode, and a separator, a case accommodating the electrode assembly therein, a linear welding portion extending across a first surface among a plurality of surfaces of the case along a first direction, the linear welding portion having two sides, and a protruding extension on at least one of the two sides of the linear welding portion along a second direction crossing the first direction, the protruding extension protruding from the first surface and extending along the first direction.

## Description

### BACKGROUND

### 1. Field

The present invention relates to a rechargeable battery and a method of manufacturing the same.

### 2. Description of the Related Art

A rechargeable battery is a device that converts external electrical energy into chemical energy and stores it, and makes it possible to use the stored chemical energy as electrical energy again.

The rechargeable battery includes an electrode assembly that stores electrical energy as chemical energy, and a case that accommodates the electrode assembly therein and forms an exterior of the rechargeable battery.

The case needs to have an inner space formed to accommodate the electrode assembly, and the case having the inner space may be manufactured in various ways.

### SUMMARY

The invention concerns a rechargeable battery, including an electrode assembly including a positive electrode, a negative electrode, and a separator, a case accommodating the electrode assembly therein, a linear welding portion extending across a first surface among a plurality of surfaces of the case along a first direction, the linear welding portion having two sides, and a protruding extension on at least one of the two sides of the linear welding portion along a second direction crossing the first direction, the protruding extension protruding from the first surface and extending along the first direction.

The linear welding portion may include a melted compensation protrusion protruding from the first surface.

The first surface may include a first portion on one side of the two sides of the linear welding portion and a second portion on the another side of the two sides, and the linear welding portion may be a butt welding of the first portion and the second portion.

The protruding extension may include a first protruding extension on the first portion and a second protruding extension on the second portion.

The first surface may include a first portion on one side of the two sides of the linear welding portion and a second portion on another side of the two sides, the protruding extension may include a first protruding extension on the first portion and a second protruding extension on the second portion, and a distance between an outer end of the first protruding extension and an outer end of the second protruding extension along the second direction may be greater than a width of the linear welding portion.

A distance between an inner end of the first protruding extension and an inner end of the second protruding extension along the second direction may correspond to the width of the linear welding portion.

A welding depth of the linear welding portion may be smaller than a thickness of the first surface.

A welding portion extending along the first direction is only on the first surface of the case.

At least a portion of the case may be a bent plate-shaped base material, and a pair of end portions of the base material may include a butt welding at the linear welding portion.

A plurality of edges of the case extending along the first direction may correspond to a bent portion in which a plate-shaped base material is bent.

The linear welding portion may be on an entirety of the first surface along the first direction.

The rechargeable battery may further include a finishing welding portion in a direction crossing the first direction at one end of the linear welding portion.

Side surfaces respectively positioned on the two sides of the case in the first direction may be connected to the first surface through a weld.

The case may include a body portion including the first surface, the body portion extending along the first direction and in which a side surface in the first direction is opened, a side portion closing the side surface of the body portion, and a side welding portion extending along a circumference of the side portion, the side welding portion being between the body portion and the side portion.

An end portion of the linear welding portion may contact the side welding portion.

A side surface of the case in the first direction may include a terminal portion connected to the electrode assembly.

The rechargeable battery may further include a vent portion on a second surface of the case is on an opposite side of the first surface facing the case, the vent portion being openable by an increase in an internal pressure of the case to discharge gas from inside the case to an outside of the case.

The invention further concerns a method of manufacturing a rechargeable battery, the method including welding a first surface of a case to form a linear welding portion extending across the first surface along a first direction, and accommodating an electrode assembly including a positive electrode, a negative electrode, and a separator inside the case, wherein the linear welding portion is formed adjacent to at least one protruding extension protruding from the first surface, the linear welding portion extending along the first direction and a second direction crossing the first direction.

The first surface may be provided with a compensation protrusion protruding from the first surface and extending along the first direction, and melting a portion of the compensation protrusion by welding to form at least part of the linear welding portion, and a remainder of the compensation protrusion forms the at least one protruding extension.

The method of manufacturing the rechargeable battery may further include cutting a metal plate extending along the first direction to form a plate-shaped base material, and bending the base material so that both ends of the base material are positioned on the first surface to form a body portion of the case, wherein the linear welding portion is formed by welding the both ends of the base material positioned on the first surface of the body portion, and the compensation protrusion is formed at the both ends of the base material by cutting the metal plate.

### BRIEF DESCRIPTION OF THE DRAWINGS

Features will become apparent to those of ordinary skill in the art by describing in detail exemplary embodiments with reference to the attached drawings, in which:
FIG. 1 illustrates a perspective view of a rechargeable battery according to an embodiment of the present invention;
FIG. 2 illustrates an exploded perspective view of a rechargeable battery according to an embodiment of the present invention;
FIG. 3 illustrates an internal cross-sectional view of a rechargeable battery according to an embodiment of the present invention;
FIG. 4 illustrates a perspective view of a body portion of a case in a rechargeable battery according to an embodiment of the present invention;
FIG. 5 illustrates a cross-sectional view showing a linear welding portion of a body portion in a rechargeable battery according to an embodiment of the present invention;
FIG. 6 illustrates a linear welding portion in which welding is performed in a state in which a compensation protrusion is not provided on a first surface of a case of the present invention;
FIG. 7 illustrates a process in which a compensation protrusion is melted and a linear welding portion is formed in a rechargeable battery according to an embodiment of the present invention;
FIGS. 8A and 8B illustrate a finishing welding portion formed in a case in a rechargeable battery according to an embodiment of the present invention;
Fig. 9 illustrates a perspective view of a state in which a vent member is disassembled from a case in a rechargeable battery according to an embodiment of the present invention;
FIG. 10 illustrates a perspective view of a state in which a side portion of a case is disassembled in a rechargeable battery according to an embodiment of the present invention;
FIG. 11 illustrates a side welding portion of a rechargeable battery according to an embodiment of the present invention;
FIG. 12 schematically illustrates a case in which a base material is prepared by cutting a metal plate in an embodiment of the present invention;
FIG. 13 schematically illustrates a case in which a base material having a compensation protrusion is formed in an embodiment of the present invention;
FIG. 14 illustrates a process of forming a body portion by bending a base material in an embodiment of the present invention; and
FIG. 15 illustrates a flowchart of a method of manufacturing a rechargeable battery according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As those of ordinary skill in the art would realize, the described embodiments may be modified in various different ways, all without departing from the scope of the only and present invention. In addition, parts in the drawings unrelated to the detailed description are omitted to ensure clarity of the invention.

In the present specification, a repeated description of the same elements will be omitted.

In addition, in the present specification, it should be understood that, when it is described that an element is "coupled" or "connected" to another element, the element may be "directly coupled" or "directly connected" to the another element, or may be "coupled" or "connected" to the other element through a third element. In contrast, in the present specification, it should be understood that, when it is described that an element is "directly coupled" or "directly connected" to another element, no element is present between the element and the other element.

In addition, terms used in the present specification are used only to describe specific embodiments, and are not intended to limit the present invention.

Singular expressions used herein include plural expressions unless they have definitely opposite meanings in the context.

In addition, in the present specification, it should be understood that the term "include", "comprise", "have", or "configure" indicates that a feature, a number, a step, an operation, a constituent element, a part, or a combination thereof described in the specification is present, but does not exclude a possibility of presence or addition of one or more other features, numbers, steps, operations, constituent elements, parts, or combinations, in advance.

In the present specification, the term 'and/or' includes any combination of the listed items or any of the listed items. In the present specification, 'A or B' may include one of 'A' and 'B', or 'both A and B'.

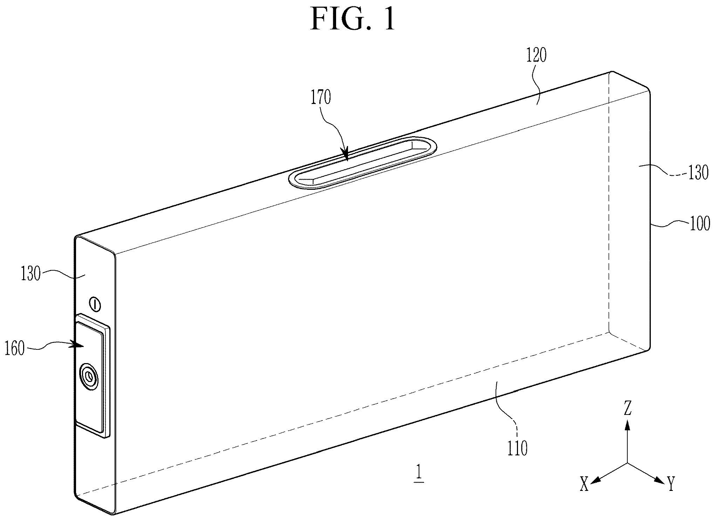

FIG. 1 illustrates the appearance of a rechargeable battery 1 according to an embodiment. In the embodiment, the rechargeable battery 1 includes a case 100, and the case 100 may form the appearance of the rechargeable battery 1.

The case 100 may have various shapes. For example, the case 100 may have a hexahedral shape as illustrated in FIG. 1, and may have various shapes such as a cylindrical shape as needed. Hereinafter, for better understanding and ease of description, the case 100 having a hexahedral shape will be described as a reference.

The case 100 may be made of various materials. For example, the case 100 may be made of various kinds of metals such as aluminum, an aluminum alloy, and nickel-plated steel.

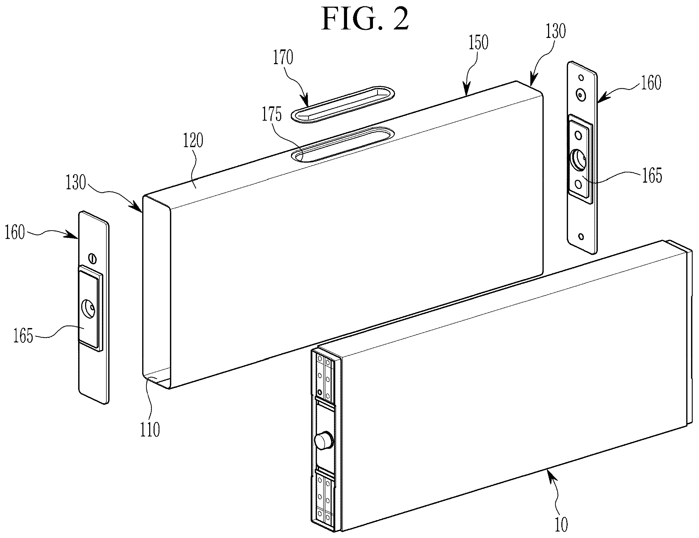

The rechargeable battery 1 may include a vent portion 170 provided in the case 100, and may include a terminal portion 165 connected to the electrode assembly 10 (see FIG. 2). A detailed description of the vent portion 170 and the terminal portion 165 will be described later.

In an embodiment, the length direction of the case 100 may be the X direction shown in FIG. 1, the width direction of the case 100 may be the Y-direction shown in FIG. 1, and the height direction of the case 100 may be the Z direction shown in FIG. 1.

FIG. 2 illustrates an exploded state of respective components of the rechargeable battery 1 according to an embodiment.

The rechargeable battery 1 according to the embodiment includes the case 100 and the electrode assembly 10 (to be) accommodated in the case 100, and the case 100 may include a body portion 150 in which at least one of both of the side surface 130 based on the longitudinal direction is open.

The body portion 150 may include a plurality of surfaces and may be in the form of a tube (e.g., a hexahedral tube) extending along a first direction. The first direction may be the length direction or X-direction of the case 100. The body portion 150 may be a hexahedron with a rectangular cross-section, with the side surface 130 (at least one of the side surface 130) positioned in the first direction being open.

In addition, the case 100 may include the side portion 160 coupled to the body portion 150 to close the side surface 130 (that is open) of the body portion 150. The body portion 150 may be closed in its internal space by the coupling of the side portion 160 with the electrode assembly 10 inserted therein.

The rechargeable battery 1 according to the embodiment may include a terminal portion 165 provided in the case 100. The terminal portion 165 may be electrically connected to the electrode assembly 10 accommodated in the case 100 (e.g., on the side portion 160), and at least a portion thereof may be exposed to the outside of the case 100.

In the embodiment, the terminal portion 165 may be provided at various positions. For example, the terminal portion 165 may be provided on the side surface 130 (e.g., open side surface) positioned in the first direction among a plurality of surfaces of the case 100, and may be connected to the electrode assembly 10.

In other words, the terminal portion 165 may be provided on the side portion 160 as shown in FIG. 1. Although the position of the terminal portion 165 may vary, the following description is based on a structure in which the terminal portion 165 is provided on the side portion 160 for better understanding and ease of description.

The case 100 may include the vent portion 170 described above. The case 100 may be provided with a vent opening 175 for communicating between the inside and the outside thereof, and the vent portion 170 may include a vent member 171 coupled to the case 100 to close the vent opening 175.

The vent portion 170 may be provided at various positions of the case 100. For example, the case 100 may include a plurality of surfaces, and the vent portion 170 may be positioned on one of the plurality of surfaces.

For example, the plurality of surfaces of the case 100 may include a first surface 110 and a second surface 120 positioned opposite the first surface 110, and the vent portion 170 may be positioned on the second surface 120. In the embodiment, the first surface 110 may be a lower surface of the case 100, and the second surface 120 may be an upper surface of the case 100 (in the orientation shown).

The vent portion 170 may be opened by an increase in the internal pressure of the case 100 to discharge the gas from inside the case 100 to the outside of the case 100.

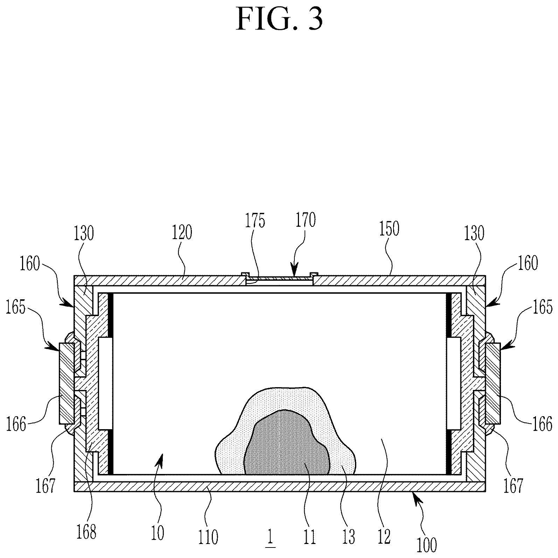

Meanwhile, the inside of the rechargeable battery 1 according to the embodiment is illustrated in FIG. 3.

A closed space may be defined inside the case 100. The electrode assembly 10 may be accommodated in the inner space of the case 100, and the electrode assembly 10 may include a positive electrode 11, a negative electrode 12, and a separator 13.

The electrode assembly 10 may be provided in a stacked form in which the positive electrode 11, the negative electrode 12, and the separator 13 are simply stacked in a plate shape, or in a wound form wound around a winding core axis in a mutually stacked (e.g., wound) state.

The positive electrode 11 may include a positive electrode composite layer in which a positive electrode 11 active material (for example, a transition metal oxide (LiCoO2, LiNiO2, LiMn2O4, or the like)) is coated on a positive electrode 11 current collecting plate, and the negative electrode 12 may include a negative electrode 12 composite layer in which a negative electrode 12 active material (for example, graphite, carbon, or the like) is coated on a negative electrode 12 current collecting plate. The negative electrode 12 current collecting plate may be a copper (Cu) foil, and the positive electrode 11 current collecting plate may be an aluminum (Al) foil, but the material of each current collecting plate may vary.

The separator 13 may be interposed between the positive electrode 11 and the negative electrode 12 to block physical contact between the positive electrode 11 and the negative electrode 12. The separator 13 may block contact between the positive electrode 11 and the negative electrode 12 to prevent an electrical short and allow only the movement of ions (for example, lithium (Li) ions). The separator 13 may be made of a polyethylene (PE) film, a polypropylene (PP) film, or the like.

The internal space of the case 100 may be filled with an electrolyte, and at least a portion of the electrode assembly 10 may be immersed in the electrolyte, and the electrolyte may serve as a medium for the movement of the ions.

Meanwhile, each of the positive electrode 11 and the negative electrode 12 may include a coated region where the active material is coated, and an uncoated region where the current collecting plate is exposed without the active material being coated.

In addition, a current collecting portion 168 may be provided inside the case 100. The current collecting portion 168 may be electrically connected to the uncoated region of the positive electrode 11 and the uncoated region of the negative electrode 12, and may be made of a conductive material such as metal to provide a path for current flow.

The current collecting portion 168 may be provided in pairs. One of the pair of the current collecting portion 168 may be connected to the positive electrode 11, and the other of the pair may be connected to the negative electrode 12.

Meanwhile, the terminal portion 165 provided in the case 100 may include a terminal plate 166 exposed to the outside of the case 100. The terminal plate 166 may have various shapes such as a cylindrical shape or a plate shape, and may be disposed on the outer surface of the case 100.

For example, in an embodiment, the terminal plate 166 may be formed in a plate shape and disposed on the outer surface of the side surface 130 of the case 100, that is, the outer surface of the aforementioned side portion 160.

However, an insulating portion 167 may be disposed between the surface of the terminal plate 166 and the surface of the case 100. The insulating portion 167 may be made of rubber or the like and interposed between the terminal plate 166 and the case 100, thereby preventing the terminal plate 166 and the case 100 from directly contacting and conducting electricity to each other.

The current collecting portion 168 may penetrate the case 100 and be electrically connected to the terminal plate 166. Accordingly, the terminal plate 166 may be electrically connected to the positive electrode 11 or the negative electrode 12 of the electrode assembly 10.

In the embodiment, the terminal portion 165 may be one or two. When there are two of the terminal portion 165 as shown in FIG. 3, one terminal plate 166 of the two of the terminal portion 165 may be connected to the current collecting portion 168 connected to the positive electrode 11 of the electrode assembly 10, and the other of the terminal plate 166 of the two of the terminal portion 165 may be connected to the current collecting portion 168 connected to the negative electrode 12 of the electrode assembly 10.

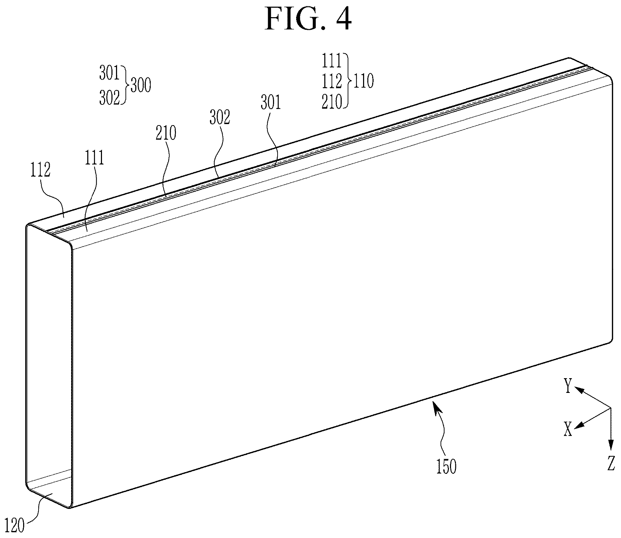

FIG. 4 illustrates a body portion 150 of the case of an embodiment.

As described above, the body portion 150 may have a quadrangular pillar shape extending in the length direction or the X-direction or the first direction of the case 100, and may have a shape in which both of the side surface 130 positioned in the first direction are open.

The body portion 150 may include a plurality of surfaces, and may include a first surface 110 in addition to the two of the open side surface 130. In addition, in the embodiment, a linear welding portion 210 may be positioned on the first surface 110.

The linear welding portion 210 may extend across the first surface 110 among the plurality of surfaces of the case 100 along the first direction, and may be formed by welding the first surface 110.

The first direction may be the length direction of the first surface 110. FIG. 4 illustrates an example in which the first direction and the X-direction are the same, and the linear welding portion 210 and the first surface 110 extend along the X-direction.

The linear welding portion 210 may be formed through a welding process on the first surface 110. For example, the first surface 110 may include a first portion 111 positioned on one of both sides (e.g., in the Y direction) of the linear welding portion 210 and a second portion 112 positioned on the other of both sides thereof, and the linear welding portion 210 may be formed by butt welding of the first portion 111 and the second portion 112.

The first surface 110 may form one closed surface by welding of (e.g., to form) the linear welding portion 210 in a state in which the first portion 111 and the second portion 112 are separated. The linear welding portion 210 may be formed throughout (e.g., along) an entirety of the first surface 110 along the first direction.

The first surface 110 may be provided with a protruding extension 300. The protruding extension 300 may be positioned on at least one of both sides of the linear welding portion 210 according to a second direction crossing the first direction.

The second direction may be a width direction of the case 100 or the first surface 110. When the first direction corresponds to the X direction, the second direction may correspond to the Y direction. The protruding extension 300 may be integrally formed with the first surface 110, or may be manufactured separately and coupled to the first surface 110.

The protruding extension 300 may be positioned only on one of both sides of the linear welding portion 210, or may be positioned on both sides, respectively. For example, the protruding extension 300 may include a first protruding extension 301 positioned on the first portion 111 and a second protruding extension 302 positioned on the second portion 112. The linear welding portion 210 may be positioned between a pair of the protruding extension 300.

The protruding extension 300 may protrude from the first surface 110 and extend along the first direction. On the first surface 110, the linear welding portion 210 and the protruding extension 300 may be adjacently disposed along the second direction (e.g., the Y direction) and extend parallel to each other along the first direction.

The case 100 for accommodating the electrode assembly 10 and the electrolyte in the internal space of the case 100 may be manufactured with a welding process to form the internal space and simultaneously seal the internal space.

A welded portion corresponds to a portion where different components are coupled, and thus, damage and deformation may occur due to welding quality or external impact. If even a portion of the welded portion is cut or separated due to the damage and deformation, the electrolyte inside the case 100 may leak or the electrode assembly 10 may be damaged.

Accordingly, the rechargeable battery 1 according to the embodiment may effectively improve the rigidity of the first surface 110 and the welded portion by providing the protruding extension 300 in a protruding shape on the first surface 110 where welding is performed, thereby suppressing damage and deformation.

In addition, in a case where a linear welding portion 210 extending in the first direction across the first surface 110 as in the embodiment is provided on the first surface 110, the protruding extension 300 is extended along the first direction and is disposed adjacent to the linear welding portion 210, thereby effectively suppressing breakage and deformation of the linear welding portion 210.

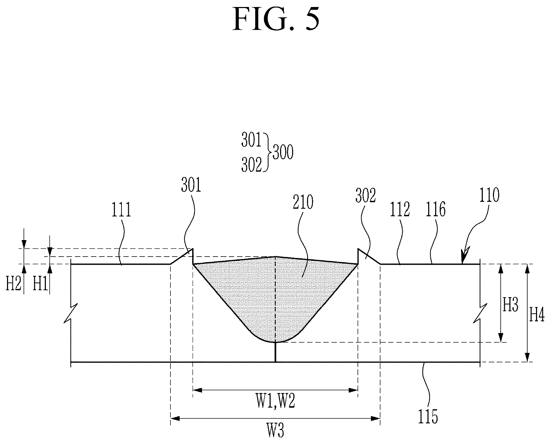

FIG. 5 illustrates a cross-section of the linear welding portion 210 and the protruding extension 300 formed on the first surface 110 according to an embodiment.

In the embodiment, the linear welding portion 210 may be positioned between a pair of the protruding extension 300. As described above, the pair of the protruding extension 300 may include a first protruding extension 301 and a second protruding extension 302, and a distance W2 between inner ends of the first protruding extension 301 and the second protruding extension 302 along the second direction (the Y direction) may correspond to a width W1 of the linear welding portion 210.

The distance between the inner ends of the first protruding extension 301 and the second protruding extension 302 may be a shortest distance W2 between the first protruding extension 301 and the second protruding extension 302.

A distance W3 between outer ends of the first protruding extension 301 and the second protruding extension 302 along the second direction may be greater than the width W1 of the linear welding portion 210. The distance W3 between the outer ends of the first protruding extension 301 and the second protruding extension 302 may be a longest distance between the first protruding extension 301 and the second protruding extension 302.

In the embodiment, a welding depth H3 of the linear welding portion 210 may be smaller than a thickness H4 of the first surface 110. Accordingly, although the linear welding portion 210 is present on an outer surface 116 facing the outside of the case 100 or the body portion 150, the linear welding portion 210 may not be present on an inner surface 115 facing the inside of the case 100.

Specifically, in the embodiment, the first surface 110 may have an irregular shape, such as a change in the height of the surface or an uneven shape, due to the welding process of the linear welding portion 210 (e.g., and due to the first protruding extension 301 and the second protruding extension 302).

Various configurations having electrical conductivity, such as the positive electrode 11, the electrode assembly 10 including an electrode, and the current collecting portion 168, may exist inside the case 100.

When the inner surface 115 of the first surface 110 has an irregular shape due to the linear welding portion 210, a situation unfavorable to the safety of the rechargeable battery 1, such as a short circuit or damage due to unintended contact with other components on the inner surface 115, may occur.

In consideration of this, in the embodiment, the linear welding portion 210 of the first surface 110 is performed on the outer surface 116 of the first surface 110, and the welding depth H3 of the linear welding portion 210 is formed to be smaller than the thickness H4 of the first surface 110, thereby minimizing the influence of the welding of the linear welding portion 210 on the inner surface 115 of the first surface 110.

Meanwhile, the protrusion height H1 of the linear welding portion 210 with respect to the first surface 110 may be equal to or greater than the first surface 110. That is, the surface of the linear welding portion 210 may be parallel to the first surface 110 or protrude from the first surface 110.

The protrusion height H2 of the first protruding extension 301 and the second protruding extension 302 with respect to the first surface 110 may be equal to or greater than the protrusion height H1 of the linear welding portion 210. For example, the first protruding extension 301 and the second protruding extension 302 may protrude from the first surface 110, and may have the same height as the linear welding portion 210 or protrude further than the linear welding portion 210.

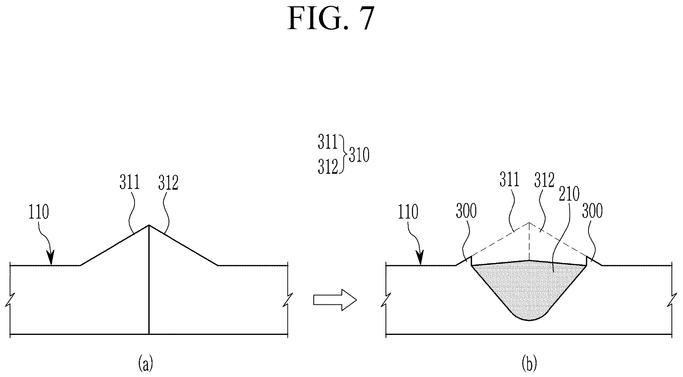

In the embodiment, the first protruding extension 301 and the second protruding extension 302 may be formed in various ways. For example, the first protruding extension 301 and the second protruding extension 302 may be formed by a compensation protrusion 310 (see FIG. 7) for improving the welding quality of the linear welding portion 210.

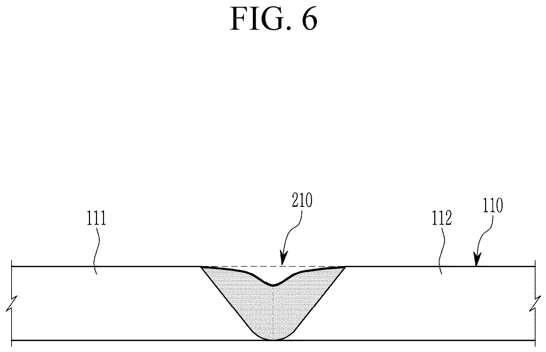

Hereinafter, a method of forming the first protruding extension 301 and the second protruding extension 302 through the compensation protrusion 310 will be described with reference to FIG. 6 and FIG. 7.

FIG. 6 illustrates a case in which the linear welding portion 210 is formed by welding without the compensation protrusion 310 on the first surface 110 of the case 100.

In general, the welding process may reduce the volume of the welding target at the welding portion due to partial evaporation of the welding target, partial filling of molten material into the spacing between the welding targets, or chemical changes in the welding target.

In this case, as shown in FIG. 6, a phenomenon in which the surface height of the welding portion decreases may occur. That is, depression of the welding portion may occur.

If the surface of the welding portion is depressed, the appearance quality of the welding result is deteriorated, and due to the thickness reduction, it may become vulnerable to deformation or breakage due to external impact.

On the other hand, FIG. 7 illustrates a state where welding is performed with the compensation protrusion 310 provided on the first surface 110 according to an embodiment, so that the linear welding portion 210 is formed.

In FIG. 7, the left side illustrates the compensation protrusion 310 positioned on the first surface 110 before welding of the linear welding portion 210, and the right side illustrates a state in which the linear welding portion 210 and the protruding extension 300 are formed by performing welding including a portion of the compensation protrusion 310.

The compensation protrusion 310 may be provided on the first portion 111 and the second portion 112 of the first surface 110, respectively, and may be positioned at a portion where the first portion 111 and the second portion 112 meet each other. For example, the compensation protrusion 310 may include a first compensation protrusion 311 positioned at an end of the first portion 111 facing the second portion 112, and a second compensation protrusion 312 positioned at an end of the second portion 112 facing the first portion 111.

The compensation protrusion 310 may extend along the first direction. The compensation protrusion 310 may extend along the length direction of the first surface 110. The compensation protrusion 310 may extend along the X-direction. The compensation protrusion 310 may be disposed to cross the first surface 110.

The cross-sectional shape of the compensation protrusion 310 may vary. For example, the compensation protrusion 310 may have a semicircular or arc shape, a rectangular shape, or a triangular shape as shown in FIG. 7. Hereinafter, for better understanding and ease of description, a structure in which the cross-sectional shape of the compensation protrusion 310 has a triangular shape as shown in FIG. 7 will be described.

The height of the compensation protrusion 310, that is, the protrusion amount of the compensation protrusion 310, may be set based on the depression amount generated by welding without the compensation protrusion 310 as shown in FIG. 6.

For example, by performing welding of the first surface 110 including the compensation protrusion 310 through several experiments, the height of the compensation protrusion 310 at which the surface of the linear welding portion 210 is not depressed may be determined. The surface of the linear welding portion 210 may be the same as the surface of the first surface 110 or may protrude from the surface of the first surface 110.

The width of the compensation protrusion 310 measured based on the second direction (e.g., the Y direction based on FIG. 4) may be greater than or equal to the width W1 of the linear welding portion 210. For example, the width of the compensation protrusion 310 may be determined by considering the width W1 of the linear welding portion 210 formed by performing welding of the first surface 110 including the compensation protrusion 310 through several experiments.

In the embodiment, the width of the compensation protrusion 310 may be greater than the width W1 of the linear welding portion 210. Accordingly, a portion of the compensation protrusion 310 may be welded to form the linear welding portion 210, and the remainder of the compensation protrusion 310 may form the aforementioned protruding extension 300.

That is, the protruding extension 300 may be formed by the remainder of the compensation protrusion 310 protruding from the first surface 110 that is melted by the welding of the linear welding portion 210.

In FIG. 7, the right side illustrates the compensation protrusion 310, which disappears due to welding, indicated by a dotted line, and illustrates a state in which the protruding extension 300 corresponding to a portion of the compensation protrusion 310 is formed.

One embodiment may suppress the depression of the linear welding portion 210 and improve the welding quality by forming the linear welding portion 210 with the compensation protrusion 310. In addition, by appropriately setting the width, height, and the like of the compensation protrusion 310, the end of the compensation protrusion 310 remains on the first surface 110 after the formation of the linear welding portion 210, thereby forming the protruding extension 300, and thus effectively improving the rigidity of the first surface 110 and the linear welding portion 210.

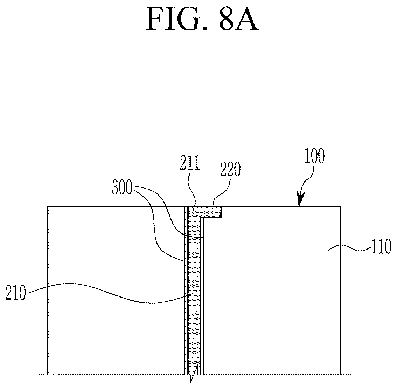

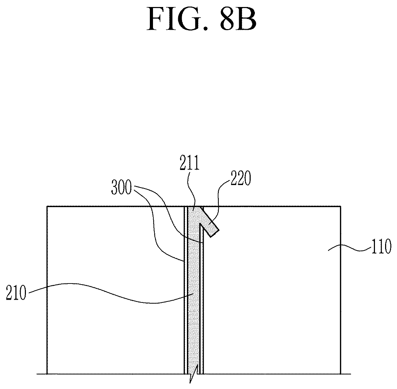

FIGS. 8A and 8B illustrates a finishing welding portion 220 connected to the end portion 211 of the linear welding portion 210 according to an embodiment.

FIG. 8A illustrates a state in which the finishing welding portion 220 extends along the second direction from the end portion 211 of the linear welding portion 210, and FIG. 8B illustrates a state in which the finishing welding portion 220 extends in an oblique direction along the first direction.

One embodiment may further include the finishing welding portion 220. The finishing welding portion 220 may be formed by welding the first surface 110. The welding may be performed and formed in a direction crossing the first direction at one end of the linear welding portion 210.

The finishing welding portion 220 may be formed together during the welding process for forming the linear welding portion 210. The finishing welding portion 220 may be formed by changing the welding direction at the end portion 211 of the linear welding portion 210 and proceeding with the welding during the welding process along the first direction for forming the linear welding portion 210.

In the embodiment, the welding quality of the linear welding portion 210 may be improved through the finishing welding portion 220.

Specifically, the welding quality of the final point where welding is completed during the welding process may deteriorate for various reasons. For example, the welding time for the final point may be shortened or lengthened during the process of stopping the movement of the welder, and the distance between the welder and the first surface 110 may change. These changes may deteriorate the welding quality of the final portion, unlike other portions where welding is performed.

In the embodiment, welding is performed by butting the first portion 111 and the second portion 112 of the first surface 110 at the linear welding portion 210, and therefore, if the welding is completed at the end portion 211 of the linear welding portion 210 and the welding quality deteriorates, it may lead to major damage to the case 100, such as separation of the first portion 111 and the second portion 112.

In consideration of this, in the embodiment, when the end portion 211 of the linear welding portion 210, which is determined by design during the welding process for forming the linear welding portion 210, for example, the end portion of the first surface 110, is reached, the welding direction is changed instead of terminating the welding, so that the welding may be completed on the first surface 110, not the butted portion of the first portion 111 and the second portion 112.

The finishing welding portion 220 may have a shape connected to the linear welding portion 210. The end portion of the finishing welding portion 220 may be spaced apart from the linear welding portion 210. The finishing welding portion 220 may be formed across the protruding extension 300. A portion of the protruding extension 300 may be welded and removed by the finishing welding portion 220.

The welding direction of the finishing welding portion 220 shown in FIGS. 8A and 8B corresponds to examples for describing an embodiment, and the welding direction of the finishing welding portion 220 may be various other directions, and the extending shape of the finishing welding portion 220 may also be various other than a straight line.

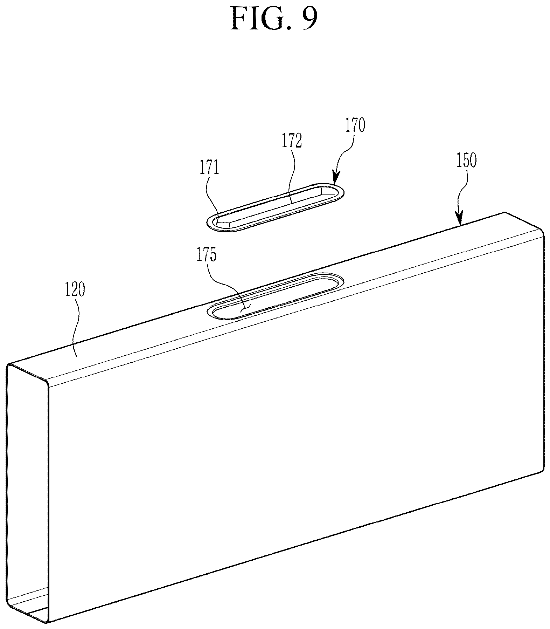

Meanwhile, FIG. 9 illustrates a vent member 171 separated from the body portion 150 of the case 100 in an embodiment.

A vent opening 175 for coupling the vent member 171 may be provided in the case 100 or the body portion 150, and the vent member 171 may be coupled to the body portion 150 to close the vent opening 175.

A rupture inducing line 172 for inducing rupture of the vent member 171 when the internal pressure inside the case 100 increases may be formed in the vent member 171. The rupture inducing line 172 may not be in the form of a complete cut through the vent member 171, and may be a linear groove formed on the surface of the vent member 171 so that the rupture inducing line 172 may be completely cut by pressure fluctuation.

In the embodiment, the vent portion 170 may be provided on the second surface 120 positioned opposite to the first surface 110. The first surface 110 may be a lower surface of the case 100, and the second surface 120 may be an upper surface of the case 100 (in the orientation shown in FIG. 9).

The vent member 171 may be coupled to the body portion 150 in various ways. For example, the circumference of the vent member 171 may be welded to the circumference of the vent opening 175 in the second surface 120 of the case 100.

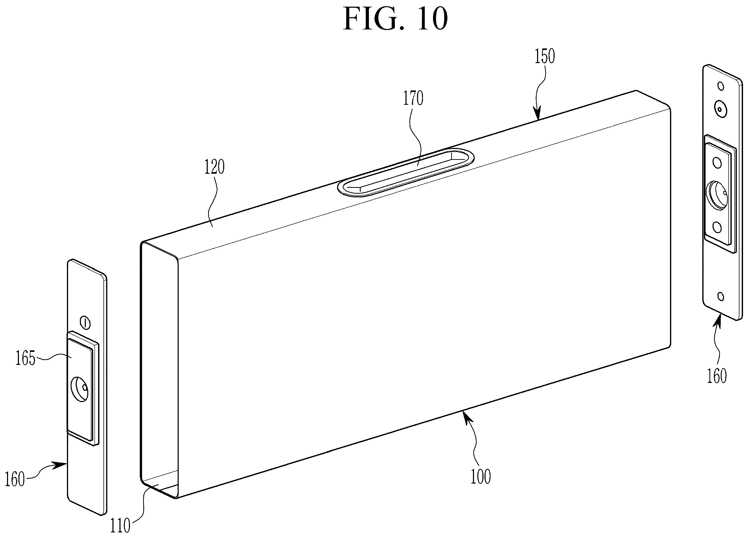

FIG. 10 illustrates a disassembled view of the body portion 150 and the side portion 160 (in this case, two side portions) of the case 100 in an embodiment.

As described above, in the embodiment, both of the side surface 130 (see FIG. 1) in the first direction of the body portion 150 may be open, and the side portion 160 may be coupled to the body portion 150 to close the open both of the side surface 130 of the body portion 150. Each of the side portion 160 may include a terminal portion 165 connected to the electrode assembly 10.

The side portion 160 may be coupled to the body portion 150 in various ways. For example, the side portion 160 may be coupled to the body portion 150 through welding. In this case, the two of the side surface 130 respectively positioned on both sides of the first direction of the case 100 among the plurality of surfaces of the case 100 may be formed by the side portion 160, and the two of the side surface 130 may be connected to the first surface 110 through welding.

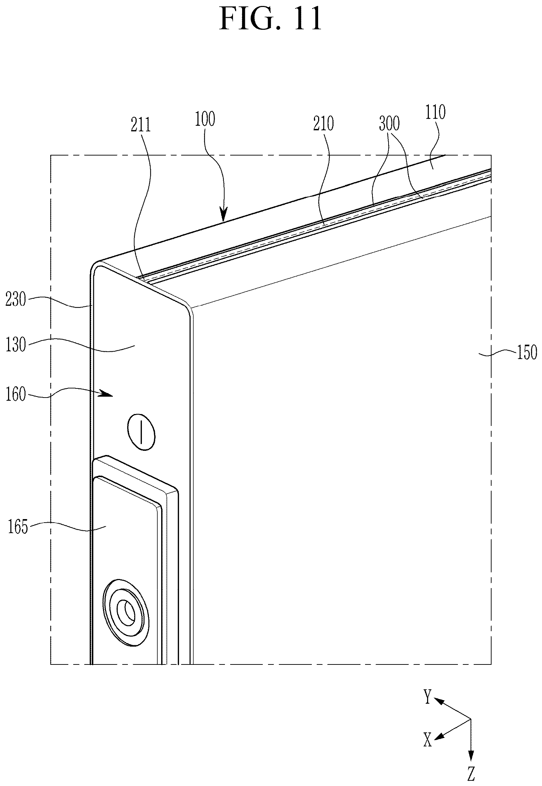

Meanwhile, FIG. 11 illustrates a side welding portion 230 formed by welding between the side portion 160 and the body portion 150.

The rechargeable battery 1 according to the embodiment may include a side welding portion 230. The side welding portion 230 may extend along the circumference of the side portion 160 and may be formed by welding between the body portion 150 and the side portion 160.

The side welding portion 230 may be formed to surround the side portion 160. The side welding portion 230 may extend to surround both of the side surface 130 of the case 100. The end portion 211 of the linear welding portion 210 may be in contact with the side welding portion 230.

In the embodiment, by welding and coupling the side portion 160 and the body portion 150 by the side welding portion 230, a case 100 with an internal space closed or a case 100 with the side surface 130 (open) then closed may be provided.

Hereinafter, a method of manufacturing the body portion 150 of the case 100 of the rechargeable battery 1 according to the embodiment will be described.

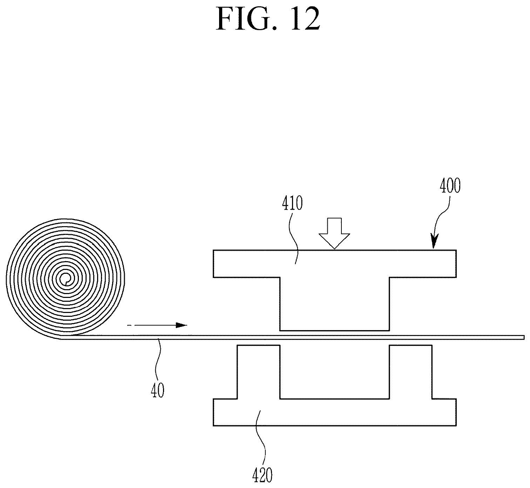

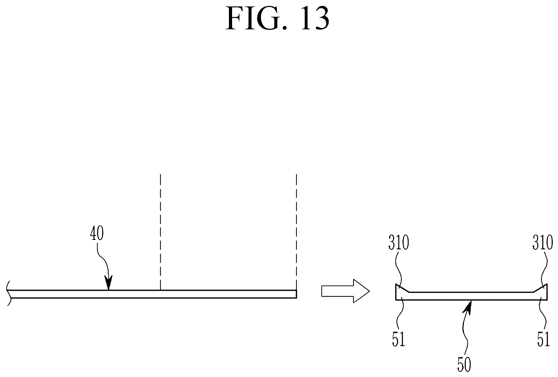

FIG. 12 illustrates a state in which a metal plate 40 is cut to form a base material 50 (see FIG. 13) of the body portion 150 from the metal plate 40.

The body portion 150 of the embodiment may be formed by processing the base material 50. The metal plate 40 may be provided to a base material cutter 400 in a form extending in the second direction, and the base material cutter 400 may cut the metal plate 40 to form the base material 50 for processing the body portion 150.

The base material cutter 400 may form the base material 50 by cutting the metal plate 40 in various ways. For example, the base material cutter 400 may include a lower mold 420 through which the metal plate 40 passes, and an upper mold 410 that is moved toward the metal plate 40 disposed on the lower mold 420 in a state spaced apart from the lower mold 420 to cut the metal plate 40.

FIG. 13 illustrates the base material 50 cut from the metal plate 40 according to an embodiment.

In the embodiment, the base material cutter 400 may cut the base material 50 from the metal plate 40 so that the compensation protrusion 310 is formed on both of the end portion 51 of the base material 50 during the process of cutting the base material 50.

Both of the compensation protrusion 310 may be formed by causing deformation at both of the end portion 51 of the base material 50 during the cutting process of the metal plate 40 by the upper mold 410. In other embodiments, both of the compensation protrusion 310 may be formed during the cutting process of the metal plate 40 by a groove pre-formed in the upper mold 410 and/or the lower mold 420.

The height and width of each of the compensation protrusion 310 may be determined by the cutting force or cutting speed of the base material cutter 400. In addition, when forming each of the compensation protrusion 310 through grooves pre-formed in the base material cutter 400, the shape of both of the compensation protrusion 310 may be changed by adjusting the shape of the grooves.

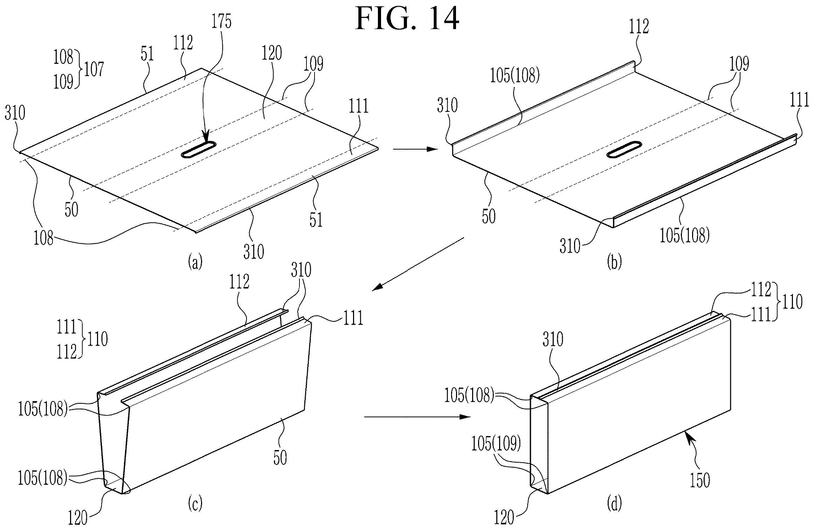

FIG. 14 illustrates a process of forming the body portion 150 by bending the base material 50 according to an embodiment.

In FIG. 14, portion (a) illustrates a circular version of the base material 50 before folding the base material 50, portion (b) illustrates a state in which a first bent portion 108 of the base material 50 is bent, portion (c) illustrates a state in which a second bent portion 109 of the base material 50 is bent, and portion (d) illustrates a body portion 150 in which a first portion 111 and a second portion 112 are in contact to form a first surface 110.

Referring to portion (a) in FIG. 14, in the base material 50 prepared by cutting the metal plate 40 described above to have the compensation protrusion 310, bent portions 107 for folding the base material (50) to form the body portion 150 may be defined.

The bent portion 107 may be a virtual line that cannot be identified with the naked eye, and the body portion 150 with both of the side surface 130 open may be manufactured through the bending of the bent portion 107. The bent portion 107 may correspond to (e.g., may include) edges 105 extending in the first direction in the body portion 150.

Before bending, the base material 50 may be provided with the compensation protrusion 310, and the vent opening 175 described above may be formed through a punching process or the like.

Referring to portion (b) in FIG. 14, the bent portion 107 may include a first bent portion 108 and a second bent portion 109, and a first portion 111 and a second portion 112 of the first surface 110 may be formed by bending the first bent portion 108 of the base material 50. The first portion 111 and the second portion 112 may each include the end portion 51 of the base material 50 and may include the compensation protrusion 310.

Referring to portions (c) and (d) in FIG. 14, the body portion 150 may be formed by bending the second bent portion 109 in the base material 50 with the first bent portion 108 bent. The second surface 120 of the case 100 or the body portion 150 may be formed by bending the second bent portion 109.

In addition, the first surface 110 may be formed by disposing (e.g., arranging) the first portion 111 and the second portion 112 of the first surface 110 to contact each other. Both of the end portion 51 of the base material 50 facing each other on the first surface 110 may form the linear welding portion 210 described above through a welding process.

In the embodiment, at least a portion of the case 100 is formed by bending a plate-shaped base material 50, thereby reducing the welding process required for manufacturing the case 100, and accordingly, the sealing property or durability of the inside of the case 100 may be improved.

A plurality of the edge 105 extending along the first direction in the case 100 may correspond to bent portions 107 where the base material 50 (plate-shaped) is bent.

A pair of the end portion 51 of the base material 50 may be butt-welded at the linear welding portion 210, thereby forming the linear welding portion 210. A welding portion extending along the first direction may be formed only on the first surface 110 among the plurality of surfaces of the case 100.

In the embodiment, only a single welding process may be performed in the formation of the body portion 150 of the case 100, thereby simplifying the manufacturing process of the case 100 and improving the structural stability of the case 100.

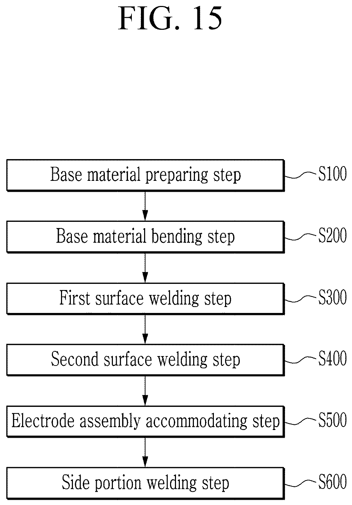

FIG. 15 illustrates a flowchart of a method of manufacturing the rechargeable battery 1 according to an embodiment.

Hereinafter, the method of manufacturing the rechargeable battery 1 according to the embodiment will be described with reference to FIG. 15, and the redundant description of the contents described in the rechargeable battery 1 will be omitted as much as possible.

The method of manufacturing the rechargeable battery 1 according to the embodiment may include a base material preparing step (S100). In the base material preparing step (S100), the base material 50 (plate-shaped) may be formed by cutting the metal plate 40 extending along the first direction.

In the base material preparing step (S100), the compensation protrusion 310 may be formed at both ends of the base material 50 by the cutting process of the metal plate 40.

The method of manufacturing the rechargeable battery 1 according to the embodiment may include a base material bending step (S200). In the base material bending step (S200), the body portion 150 of the case 100 may be formed by bending both ends of the base material 50 prepared in the base material preparing step (S100) so that they are positioned on the first surface 110.

The method of manufacturing the rechargeable battery 1 according to the embodiment may include a first surface welding step (S300). In the first surface welding step (S300), the linear welding portion 210 extending across the first surface 110 along the first direction may be formed by welding the first surface 110 of the case 100.

In the first surface welding step (S300), the linear welding portion 210 may be formed by welding both ends of the base material 50 positioned on the first surface 110 of the body portion 150 formed in the base material bending step (S200).

In the first surface welding step (S300), the linear welding portion 210 may be formed to be adjacent along the second direction crossing the first direction with at least one of the protruding extension 300 protruding from the first surface 110 and extending along the first direction.

In the first surface welding step (S300), the first surface 110 may be provided with the compensation protrusion 310 protruding from the first surface 110 and extending along the first direction.

In the first surface welding step (S300), a portion of the compensation protrusion 310 may be melted by welding to form at least a portion of the linear welding portion 210, and the remainder of the compensation protrusion 310 may form the protruding extension 300.

The method of manufacturing the rechargeable battery 1 according to the embodiment may include a second surface welding step (S400). In the second surface welding step (S400), the vent member 171 may be welded and coupled to the second surface 120 so that the vent opening 175 provided on the second surface 120 is closed.

The method of manufacturing the rechargeable battery 1 according to the embodiment may include an electrode assembly accommodating step (S500). In the electrode assembly accommodating step (S500), the electrode assembly 10 including the positive electrode 11, the negative electrode 12, and the separator 13 may be accommodated inside the case 100.

The method of manufacturing the rechargeable battery 1 according to the embodiment may include a side portion welding step (S600). In the side portion welding step (S600), the side portion 160 may be welded and coupled to the body portion 150 so that the open side surface130 of the case 100 is closed by the side portion 160.

The side welding portion 230 may be formed by welding the circumference of the side portion 160 and the circumference of the side surface 130 (open) of the body portion 150.

The electrode assembly 10 may be accommodated inside the case 100 where the side portion 160 is welded. That is, the inside of the case 100 may be closed by welding the side portion 160 to the side surface 130 of the case 100 with the electrode assembly 10 inserted therein.

Meanwhile, when both of the side surface 130 of the case 100 are open, in the electrode assembly accommodating step (S500) described above, the body portion 150 may be first welded to one of the side surface 130 of the case 100, and then the electrode assembly 10 may be accommodated inside the case 100.

With one of both of the side surface 130 of the case 100 closed and the electrode assembly 10 accommodated inside the case 100, the inside of the case 100 may be closed by welding the side portion 160 to the other of both of the side surface 130 of the case 100.

That is, in the electrode assembly accommodating step (S500), after forming the first of the side welding portion 230 by welding the body portion 150 and the first of the side portion 160 so that the first of the side surface 130 of the case 100 is closed, the electrode assembly 10 may be inserted into the case 100 through the open second of the side surface 130 of the case 100.

Thereafter, in the side portion welding step (S600), the second of the side welding portion 230 may be formed by welding the body portion 150 and the second of the side portion 160 so that the second of the side surface 130 of the case 100 is closed.

An electrolyte for moving ions together with the electrode assembly may be filled in a secondary battery case, and the electrode assembly may cause an explosion or fire due to a short circuit or other reasons even with a small impact or deformation.

Accordingly, effectively securing the safety of the inner space of the case, effectively increasing the rigidity of the case, and efficiently manufacturing the case are important tasks in the present technical field.

Embodiments attempt to provide a rechargeable battery and a method of manufacturing the same that may effectively increase the strength of a case.

Embodiments attempt to provide a rechargeable battery and a method of manufacturing the same that may improve safety by reducing a welding area.

Embodiments attempt to provide a rechargeable battery and a method of manufacturing the same that may effectively improve the welding quality of a welding area.

## Claims

1. A rechargeable battery (1), comprising:
an electrode assembly (10) including a positive electrode (11), a negative electrode (12), and a separator (13);
a case (100) accommodating the electrode assembly (10) therein;
a linear welding portion (210) extending across a first surface (110) among a plurality of surfaces of the case (100) along a first direction, the linear welding portion (210) having two sides; and
a protruding extension (300) on at least one of the two sides of the linear welding portion (210) along a second direction crossing the first direction, the protruding extension (300) protruding from the first surface (110) and extending along the first direction.

2. The rechargeable battery (1) as claimed in claim 1, wherein the protruding extension (300) is formed by a remainder of a portion of a compensation protrusion (310) protruding from the first surface (110), which is melted by welding of the linear welding portion (210).

3. The rechargeable battery (1) as claimed in claim 1 or 2, wherein:
the first surface (110) includes a first portion (111) on one side of the two sides of the linear welding portion (210) and a second portion (112) on the another side of the two sides,
the linear welding portion (210) is a butt welding of the first portion (111) and the second portion (112), and/or
the protruding extension (300) includes a first protruding extension (301) on the first portion (111) and a second protruding extension (302) on the second portion (112).

4. The rechargeable battery (1) as claimed in any one of claims 1 to 3, wherein:
the first surface (110) includes a first portion (111) on one side of the two sides of the linear welding portion (210) and a second portion (112) on another side of the two sides,
the protruding extension (300) includes a first protruding extension (301) on the first portion (111) and a second protruding extension (302) on the second portion (112),
a distance between an outer end of the first protruding extension (301) and an outer end of the second protruding extension (302) along the second direction is greater than a width of the linear welding portion (210), and/or
a distance between an inner end of the first protruding extension (301) and an inner end of the second protruding extension (302) along the second direction corresponds to the width of the linear welding portion (210).

5. The rechargeable battery (1) as claimed in any one of claims 1 to 4,
wherein a welding depth of the linear welding portion (210) is smaller than a thickness of the first surface (110), and/or
a welding portion extending along the first direction is only on the first surface (110) of the case (100).

6. The rechargeable battery (1) as claimed in any one of claims 1 to 5, wherein:
at least a portion of the case (100) is a bent plate-shaped base material (50), and
a pair of end portions (51) of the base material (50) include a butt welding at the linear welding portion (210).

7. The rechargeable battery (1) as claimed in any one of claims 1 to 6, wherein a plurality of edges of the case (100) extending along the first direction correspond to a bent portion (107) in which a plate-shaped base material (50) is bent.

8. The rechargeable battery (1) as claimed in any one of claims 1 to 7,
wherein the linear welding portion (210) is on an entirety of the first surface (110) along the first direction, and/or
further comprising a finishing welding portion (220) in a direction crossing the first direction at one end of the linear welding portion (210).

9. The rechargeable battery (1) as claimed in any one of claims 1 to 8, wherein side surfaces (130) respectively positioned on the two sides of the case (100) in the first direction are connected to the first surface (110) through a weld.

10. The rechargeable battery (1) as claimed in any one of claims 1 to 9, wherein the case (100) includes:
a body portion (150) including the first surface (110), the body portion (150) extending along the first direction and in which a side surface (130) in the first direction is opened,
a side portion (160) closing the side surface (130) of the body portion (150), and
a side welding portion (230) extending along a circumference of the side portion (160), the side welding portion (230) being between the body portion (150) and the side portion (160), and/or
an end portion (211) of the linear welding portion (210) contacts the side welding portion (230).

11. The rechargeable battery (1) as claimed in any one of claims 1 to 10, wherein a side surface (130) of the case (100) in the first direction includes a terminal portion (165) connected to the electrode assembly (10).

12. The rechargeable battery (1) as claimed in any one of claims 1 to 11, further comprising a vent portion (170) on a second surface (120) of the case (100) is on an opposite side of the first surface (110) facing the case (100), the vent portion (170) being openable by an increase in an internal pressure of the case (100) to discharge gas from inside the case (100) to an outside of the case (100).

13. A method of manufacturing a rechargeable battery (1), the method comprising:
welding a first surface (110) of a case (100) to form a linear welding portion (210) extending across the first surface (110) along a first direction; and
accommodating an electrode assembly (10) including a positive electrode (11), a negative electrode (12), and a separator (13) inside the case (100),
wherein the linear welding portion (210) is formed adjacent to at least one protruding extension (300) protruding from the first surface (110), the linear welding portion (210) extending along the first direction and a second direction crossing the first direction.

14. The method of manufacturing the rechargeable battery (1) as claimed in claim 13, wherein:
the first surface (110) is provided with a compensation protrusion (310) protruding from the first surface (110) and extending along the first direction, and
melting a portion of the compensation protrusion (310) by welding to form at least part of the linear welding portion (210), and a remainder of the compensation protrusion (310) forms the at least one protruding extension (300).

15. The method of manufacturing the rechargeable battery as claimed in claim 14, further comprising:
cutting a metal plate (40) extending along the second direction to form a plate-shaped base material (50); and
bending the base material (50) so that both ends of the base material (50) are positioned on the first surface (110) to form a body portion (150) of the case (100), wherein:
the linear welding portion (210) is formed by welding the both ends of the base material (50) positioned on the first surface (110) of the body portion (150), and
the compensation protrusion (310) is formed at the both ends of the base material (50) by cutting the metal plate (40).
